# EUROPEAN PATENT SPECIFICATION

(11) **EP 2 494 736 B1**
(45) Date of publication and mention of the grant of the patent: **18.12.2019**
(21) Application number: 10827041.4
(22) Date of filing: 26.10.2010
(51) Int. Cl.: H04L 12/28, H02J 3/14

(54) **METHOD OF CONTROLLING NETWORK SYSTEM**
VERFAHREN ZUR STEUERUNG EINES NETZWERKSYSTEMS
PROCÉDÉ DE COMMANDE D'UN SYSTÈME EN RÉSEAU

(30) Priority: 26.10.2009 KR 20090101945; 08.07.2010 KR 20100065825
(43) Date of publication of application: 05.09.2012
(73) Proprietor: LG Electronics Inc., SEOUL, 07336 (KR)
(72) Inventor: SEO, Daegeun, Seoul 153-802 (KR); JANG, Bongmun, Seoul 153-802 (KR); AHN, Junho, Seoul 153-802 (KR); LEE, Wookjin, Seoul 153-802 (KR); SEO, Munseok, Seoul 153-802 (KR); CHEONG, Dalho, Seoul 153-802 (KR); HWANG, Jinseong, Seoul 153-802 (KR)
(74) Representative: Ter Meer Steinmeister & Partner
(86) International application number: PCT/KR2010/007358
(87) International publication number: WO 2011/052957

(56) References cited:
- WO-A1-03/084022
- WO-A2-2008/044885
- KR-A- 20060 119 299
- KR-A- 20080 013 034
- US-A1- 2003 225 483
- US-A1- 2007 276 547
- US-A1- 2008 141 051
- US-A1- 2009 254 225

## Description

### Technical Field

The present disclosure relates to a method of controlling a network system.

### Background Art

Electric products operate while consuming electric energy. Since electric products consume electric energy, the amount of electricity consumption or electricity charge may be a sensitive matter to users.

As energy consumption increases, it is necessary to develop more energy sources and produce more electric energy. However, electricity generation causes a large amount of greenhouse gas and environmental problems such as global warming. To reduce emission of greenhouse gas, particularly, carbon dioxide, alternative energy sources have been developed such as wind power, solar light, solar heat, geothermal power, tidal power, and water power as well as nuclear power and fuel cells.

Along with this, a smart grid has been proposed as the next generation power grid to improve energy efficiency by realizing two-way and real-time information exchange between power providers and consumers in a way of applying information technology (IT) to the existing power grid.

US 2007/0276547 A1 relates to methods and systems for optimizing the control of energy supply and demand. An energy control unit includes one or more algorithms for scheduling the control of energy consumption devices on the basis of variables relating to forecast energy supply and demand. Devices for which energy consumption can be scheduled or deferred are activated during periods of cheapest energy usage. Battery storage and alternative energy sources, for example, photovoltaic cells, are activated to sell energy to the power grid during periods that are determined to correspond to favorable cost conditions.

US 2009/0254225 A1 discloses a method for enterprise energy automation. Data from an energy supply and delivery system is monitored and data from one or more building automation systems in a group of buildings designated for modifying coincident peak load on the energy supply and delivery system if building performance capability permits is extracted. A building operation strategy for one ore more buildings in the group of buildings is determined based on the data from the energy supply and delivery system and the data from the one or more building automation systems. A bit is send to the energy supply and delivery system for an energy supply and delivery system product, wherein the bid is based on an availability of the one or more buildings to modify load in a manner consistent with the building operating strategy for a specific period of time.

WO 03/084022 A1 describes a system and method managing delivery of energy from a distribution network to one or more sites. Each site has at least one device coupled to the distribution network. The at least one device controllably consumes energy. The system includes a node and a control system. The node is coupled to at least one device for sensing and controlling energy delivered to the device. A control system is coupled to the node and distribution network for delivering to the node at least one characteristic of the distribution network. The node controls the supply of energy to the device as a function of the at least one characteristic.

US 2003/0225483 A1 relates to an electronic system for power consumption management of appliances, wherein a user can set his preferences concerning the switch-on time of each appliance and read the related estimated energy consumption and/or energy cost.

### Disclosure of Invention

### Technical Problem

It is an object to provide a method of controlling a network system to operate electric products according to power information and manage electricity efficiently.

### Solution to Problem

The object is solved by the features of the independent claim. In one example, there is provided a method of controlling a network system, the method including: recognizing power information and time information regarding an operation of an electric product; and providing an energy-saving operation mode to the electric product or operating the electric product in the energy-saving operation mode for reducing an energy-related value based on the recognized power information and the time information.

The details of one or more embodiments are set forth in the accompanying drawings and the description below. Other features will be apparent from the description and drawings, and from the claims.

### Advantageous Effects of Invention

According to the embodiments, since power information including information about time-varying electricity rate information is received through a communication unit, power management is possible for electric products.

In addition, when it is selected to operate an electric product in a desired operation time period in a desired operation mode, time-varying electricity rate information is considered to determine whether to operate the electric product in the desired operation time period or an alternative operation time period and whether to operate the electric product in the desired operation mode or an alternative operation mode, so that power consumption or electricity charge can be reduced.

### Brief description of the drawings

Fig. 1 is a schematic view illustrating a network system of an embodiment.
Fig. 2 is a view illustrating a power line communication network in a residential customer.
Fig. 3 is a view illustrating an energy management system (EMS) according to an embodiment.
Fig. 4 is a control block diagram illustrating a network system according to an embodiment.
Figs. 5 to 8 are flowcharts for explaining a method of controlling a network system according to a first embodiment.
Fig. 9 is a graph illustrating a state where a desired operation mode and a desired operation time are first input for an electric product according to an embodiment.
Fig. 10 is a graph illustrating a change of an operation time period of the electric product according to an embodiment.
Fig. 11 is a graph illustrating reduction of power consumption of the electric product according to an embodiment.
Fig. 12 is a graph illustrating a state where a desired operation time period is first input for an electric product operating according to a plurality of processes.
Fig. 13 is a graph illustrating a state where some of the plurality of processes are moved from the positions shown in Fig. 12.
Fig. 14 is a graph illustrating an on-peak time period and an off-peak time period.
Fig. 15 is a block diagram illustrating a cooking device as an example of electric products.
Figs. 16 and 17 are views for explaining a method of controlling a network system according to an example for better understanding of the invention.
Fig. 18 is a flowchart for explaining the network system controlling method according to said example.

### Best mode for carrying out the invention

Reference will now be made in detail to the embodiments of the present disclosure, examples of which are illustrated in the accompanying drawings.

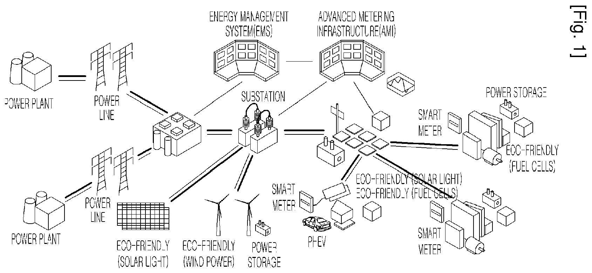

Fig. 1 is a schematic view illustrating a network system of an embodiment.

Referring to Fig. 1, the network system of the current embodiment includes a power plant generating electricity by thermal power generation, nuclear power generation, or water power generation; and a solar power plant and a wind power plant that generate electricity from renewalbe energy sources such as solar light and wind power.

The power plant, such as a thermal power plant, a nuclear power plant, and a water power plant, supplies electricity to a sub-control center through a power line, and the sub-control center supplies the electricity to a substation where the electricity is distributed to consumers such as residential customers or offices.

Electricity generated from renewable energy sources is delivered to the substation where the electricity is distributed to consumers. Electricity transmitted from the substation is distributed to consumers such as offices and residential customers through power storages.

Residential customers using a home area network (HAN) may produce electricity by using a solar battery or fuel cells of a plug in hybrid electric vehicle (PHEV) for their own use or selling the remaining electricity.

In addition, since smart metering devices are provided to consumers such as offices or residential customers, power consumption or electricity bills can be checked in real time, and thus the consumers can take action to reduce power consumption or electricity costs based on the real-time information about power consumption and electricity bills.

Furthermore, since the power plants, the sub-control center, the power storages, and the consumers can communicate with each other (two-way communication), electricity is not transmitted to the consumers unilaterally but generated and distributed to the consumers according to the consumers' situations notified to the power storages, the sub-control center, and the power plants.

In such a smart grid, an energy management system (EMS) plays a pivotal role for real-time power line communication with a consumer, and an advanced metering infrastructure (AMI) plays a pivotal role for real-time power consumption measurement.

The AMI of the smart grid is backbone technology for integrating consumers based on an open architecture. The AMI provides consumers with the ability to use electricity efficiently and power providers with the ability to detect problems on their systems and operate them efficiently.

Herein, the open architecture means a standard for connecting all electric products in a smart grid system regardless of the manufactures of the electric products, unlike in a general communication network.

Therefore, the AMI of the smart grid enables consumer-friendly efficiency concepts like "prices to devices."

That is, real-time price information of an electricity market may be displayed on an EMS and a smart meter of each residential customer, and the EMS and the smart meter may control electric products while communicating with the electric products. Thus, a user may see the information displayed on the EMS or the smart meter to check power information of each electric product and carry out power information processing such as power consumption limit setting or electricity charge limit setting to save energy and reduce costs.

In addition, a smart control device is provided in each electric product to collect operational state information of the electric product and receive power information and environment information such as temperature and humidity from the EMS or the smart meter to control the operation of the electric product.

Each electric product may be controlled based on communication among the smart control device, the EMS, and the smart meter.

The EMS may include local EMSs provided in offices or residential customers, and a central EMS configured to process information collected from the local EMSs through two-way communication.

Since real-time communication is possible between providers and consumers in a smart grid for exchanging power information, real-time grid response can be realized, and costs necessary for meeting a peak demand can be reduced.

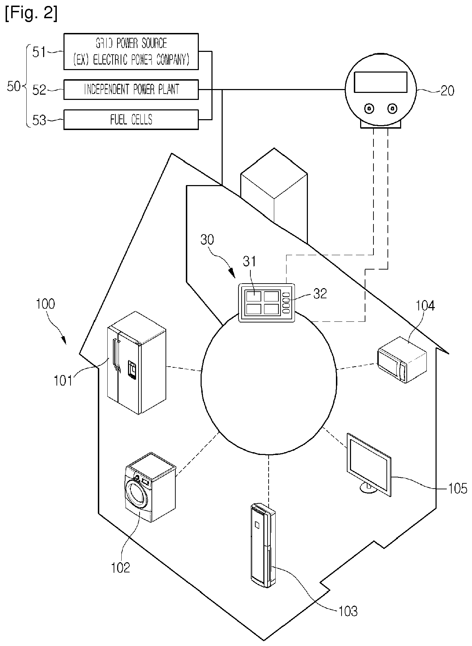

Fig. 2 is a view illustrating a power line communication network in a residential customer.

Referring to Fig. 2, the power line communication network includes: a smart meter 20, which can receive power information such as information about power supplied to the residential customer and the electricity rate of the power and measure power consumption and electricity charge in real time; and an EMS 30 connected to the smart meter 20 and capable of communicating with one or more electric products 100 and controlling the electric products 100.

The smart meter 20, the EMS 30, and the electric products 100 of the power line communication network 10 may be collectively referred to as "communication components."

That is, in the power line communication network, one component can communicate with another component for exchanging information and control the other component according to the information.

The EMS 30 may be provided in the form of a terminal, which includes a screen 31 to display the current power consumption state and external environments (temperature, humidity) and an input unit 32 to receive user's manipulations.

The EMS 30 is connected to the electric products 100 such as a refrigerator 101, a washing or drying machine 102, an air conditioner 103, a TV 105, and a cooking device 104 through an in-house network for two-way communication.

In-house communication may be performed by wireless or power line communication (PLC). Furthermore, the electric products 100 may be connected to each other for communicating with each other.

A power supply source 50 that supplies power to the residential customer may be a grid power source 51 including general power plant equipment (e.g., a thermal power plant, a nuclear power plant, and a wind power plant) or power plant equipment using renewable energy sources (e.g., solar light, wind power, and geothermal power). For example, the power supply source 50 may be provided by an electric power company.

The power supply source 50 may further include an independent power plant 52 such as a solar power plant of the residential customer, and fuel cells 53 of a vehicle or the residential customer.

Generally, the power supply source 50 is connected to the smart meter 20 and the EMS 30 to provide power information to the smart meter 20 and the EMS 30, and the information is used to control the electric products 100.

Alternatively, information may be provided from the power supply source 50 directly to communication devices (not shown) of the electric products 100, or the grid power source 51 (electric power company) may provide information to control a particular electric product of the residential customer.

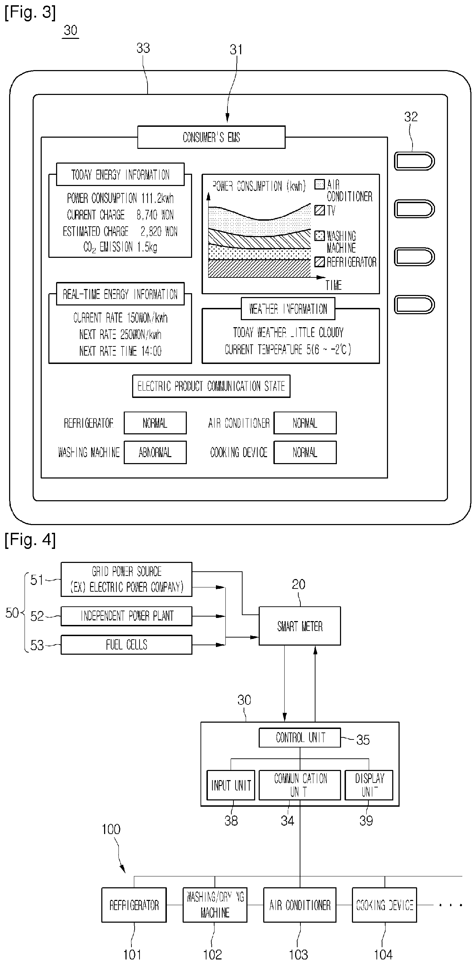

Fig. 3 is a view illustrating an energy management system (EMS) 30 according to an embodiment.

Referring to Fig. 3, the EMS 30 may be a terminal including a touch panel 33.

A screen 31 may be displayed on the touch panel 33 to provide information about an electricity consumption amount, a current electricity charge, an electricity charge estimated based on an accumulated consumption history, a carbon dioxide emission amount, an electricity rate of a current time period, and an electricity rate of a next time period; real-time energy information including information about a time period the electricity rate of which varies with time; and weather information.

In addition, a graph may be displayed on the screen 31 of the touch panel 33 to show power consumption amounts of electric products with respect to time. In addition, on/ off states may be displayed to give information about whether power is supplied to the electric products. In addition, energy information may be displayed on the screen 31 for the respective electric products. For example, energy information such as estimated operation time, power consumption, electricity charge, and carbon dioxide emission may be displayed.

An input unit 32 is provided at a side of the screen 31 so that a user can input settings to the electric products using the input unit 32. A user can set a power consumption limit or an electricity charge limit by using the input unit 32, and the EMS 30 may control the electric products according to the user's setting.

Fig. 4 is a control block diagram illustrating a network system according to an embodiment.

Referring to Fig. 4, a power supply source 50 may include a grid power source 51, an independent power plant 52, or fuel cells 53. The power supply source 50 may be connected to a smart meter 20 or an EMS 30.

The EMS 30 may include a control unit 35, an input unit 38, a communication unit 34, and a display unit 39.

The communication unit 34 communicates with in-house electric products 100 such as a refrigerator 101, a washing or drying machine 102, an air conditioner 103, and a cooking device 104 for transmitting and receiving power information and operation information.

The control unit 35 checks setting information input by a user through the input unit 38, accumulated history information about operations and power consumptions of the electric products 100, and real-time information about the supply amount of electricity. Then, the control unit 35 processes the information in real time to control operations of the electric products 100 and power to the electric products 100.

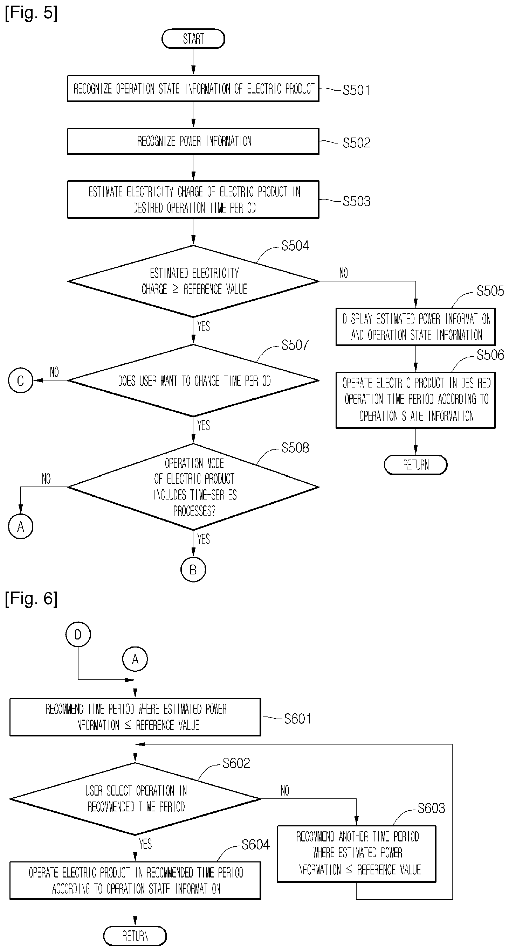

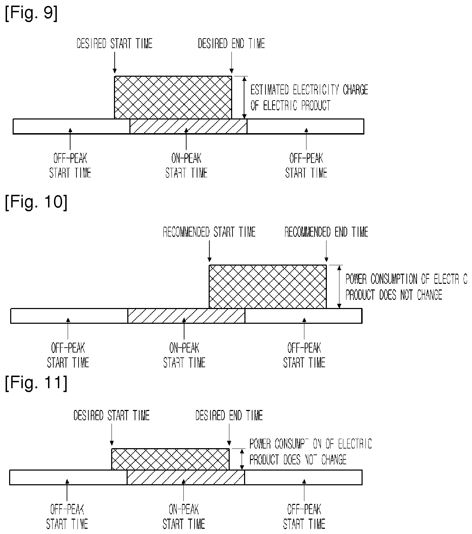

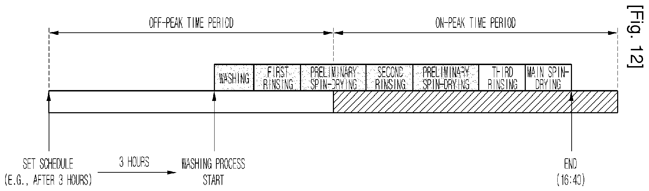

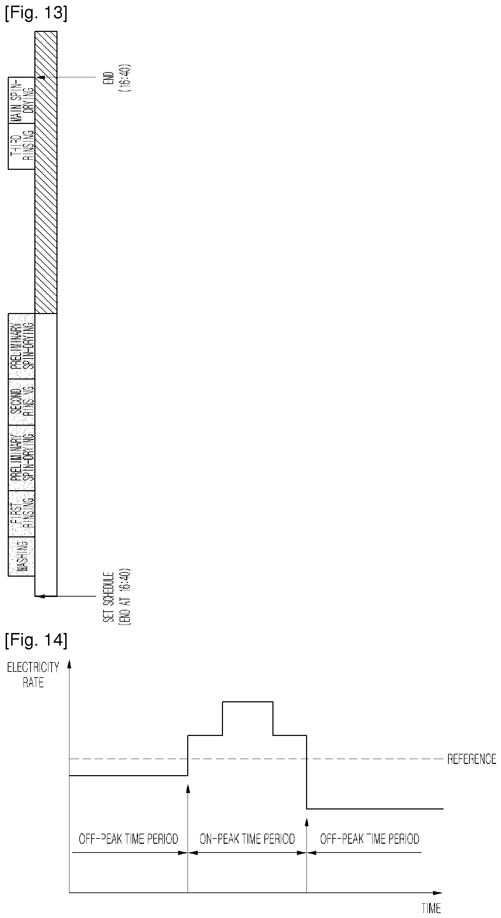

Figs. 5 to 8 are flowcharts for explaining a method of controlling a network system according to a first embodiment; Fig. 9 is a graph illustrating a state where a desired operation mode and a desired operation time are first input for an electric product according to an embodiment; Fig. 10 is a graph illustrating a change of an operation time period of the electric product according to an embodiment; Fig. 11 is a graph illustrating reduction of power consumption of the electric product according to an embodiment; Fig. 12 is a graph illustrating a state where a desired operation time period is first input for an electric product operating according to a plurality of processes; Fig. 13 is a graph illustrating a state where some of the plurality of processes are moved from the positions shown in Fig. 12; and Fig. 14 is a graph illustrating an on-peak time period and an off-peak time period.

In the current embodiment, control units included in communication components such as the EMS 30, the smart meter 20, and an electric product will be collectively referred to as a control device.

Referring to Figs. 5 to 8, the control device recognizes operation state information of an electric product (information about operations of the electric product) (S501). The operation state information includes a desired operation time period including at least one of a desired operation start time and a desired operation end time of the electric product input by a user, an estimated run time of the electric product, and a desired operation mode.

Then, the control device recognizes power information (S502). The power information includes electricity rate information varying according to time, and supply power information.

Next, power information of the electric product is estimated in the desired operation time period (S503). The estimated power information includes at least one of a power consumption amount estimated when the electric product is operated in the desired operation mode for the desired operation time period and a total electricity charge estimated based on the power consumption amount according to the electricity rate varying with time.

As shown in Fig. 9, if the control device recognizes a desired start time and a desired end time or a run time necessary to operate the electric product in the desired operation mode, it is determined whether a time period for operating the electric product in the operation mode is included in an on-peak time period or an off-peak time period, so as to estimate the power consumption amount and electricity charge of the electric product.

As shown in Fig. 14, the on-peak time period is a time period the electricity rate of which is equal to or higher than a predetermined reference value, and the off-peak time period is a time period the electricity rate of which is equal to or lower than the predetermined reference value.

After estimating power information of the electric product, it is determined whether the estimated power information is equal to or higher than a predetermined reference value (S504).

That is, it is determined whether the estimated electricity charge is equal to or higher than a predetermined reference electricity charge, or it is determined whether the estimated power consumption amount is equal to or higher than a predetermined reference power consumption amount. Alternatively, it is determined whether the estimated electricity charge and the power consumption amount are equal to or higher than predetermined reference values.

If it is determined that the estimated power information is lower than the predetermined reference value, information such as the electricity power information and the operation state information (operation mode, operation time) is displayed on a display unit of the electric product or the EMS 30 (S505).

Then, the electric product is operated in the desired operation time period according to the operation state information.

In operation S504, if it is determined that the estimated power information (the estimated power consumption amount and estimated electricity charge) is equal to or higher than the predetermined reference value, it is determined whether the user wants to change the operation time period of the electric product (S507). That is, it is determined whether a changed operation time period is input or not.

If it is determined that the user wants to change the operation time period of the electric product, it is determined whether the operation mode of the electric product includes a plurality of time-series processes (S508).

The operation mode is different according to the kind of the electric product. For example, in the case of a washing machine, the operation mode may include time-series processes of washing, rinsing, and spin-drying, and in the case of a cooking device or an air conditioner, the operation mode may include a single process of heating or cool/hot air blowing.

In case of a refrigerator, cool air generating and defrosting are alternately performed. It may be considered that the operation mode of the refrigerator includes time-series processes.

Therefore, in operation S508, if it is determined that the operation mode of the electric product includes a single process, an operation time period, in which the estimated power information (electricity charge and power consumption amount) is equal to or lower than the predetermined reference value, is recommended (S601) as shown in Fig. 6.

If the network system controlling method goes to operation S601 after the user selects a desired operation time period as shown in Fig. 9 and a desired operation mode, an operation time period stratifying a predetermined reference value as shown in Fig. 10 is recommended.

At this time, a start time and an end time are recommended, and since the desired operation mode of the user is maintained, the power consumption amount of the electric product is not changed.

However, since a portion of the operation time period overlapping with an on-peak time period is reduced, although the power consumption amount is not reduced and thus the same performance can be obtained in the desired operation mode, the electricity charge can be largely reduced as compared with the case where the electric product is operation in the original desired operation time period.

That is, when the electric product is operated in an operation mode for reducing an energy-related value, the operation time period of the electric product less overlaps with an on-peak time period as compared with the case where the electric product is operated based on input operation state information.

Referring to Fig. 6, after the operation time period is recommended, it is determined whether the recommended operation time period is selected (S602). If it is determined that the recommended operation time period is not selected, another operation time period is recommended (S603). On the other hand, if it is determined that the recommended operation time period is selected, the electric product is operated in the desired operation mode for the recommend operation time period (S604).

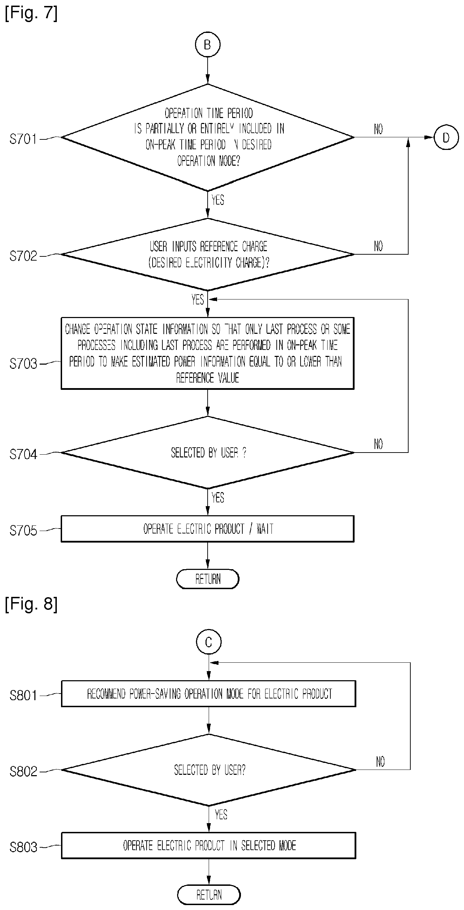

In operation S508 of Fig. 5, if it is determined that the operation mode of the electric product includes a plurality of time-series processes, as shown in Fig. 7 it is determined whether a portion or all of the operation time period is included in an on-peak time period when the electric product is operated in the desired operation mode (S701).

It is determined that a portion or all of the operation time period is included in an on-peak time period, it is determined whether the last process of the plurality of time-series processes should be performed in the on-peak time period (S702).

If it is determined that the last process of the plurality of time-series processes should be performed in the on-peak time period, the operation state information is changed so that only the last process or some processes including the last process can be performed in the on-peak time period and the estimated power information (electricity charge) can be equal to or lower than the predetermined reference value (S703).

Operations S701 to S703 will now be explained more specifically with reference to Figs. 12 and 13.

As shown in Fig. 12, if a washing machine is scheduled to operate after 3 hours, a washing process may start after about 3 hours, and then time-series processes of first rinsing, preliminary spin-drying, second rinsing, preliminary spin-drying, third rinsing, and main spin-drying may be consecutively performed.

Many of the processes are in an on-peak period. In this state, if an estimated electricity charge is higher than a predetermined reference value, it is necessary to change the operation time period of the washing machine.

Furthermore, since a user wants all the processes to be completed at a predetermined time (16:40 in Fig. 12) after the washing machine starts to operated, some processes including the last main spin-drying process may should be in the on-peak time period.

Therefore, as shown in Fig. 13, other processes than the third rinsing process and the main spin-drying process are moved to an off-peak time period from the on-peak time period.

The operation start time of the washing machine is made earlier than a desired start time. However, all the processes can be completed by the predetermined time as the user wished so that the user can be satisfied and the electricity charge can be reduced.

In operation S701, if it is determined that a portion or all of the operation time period is not included in an on-peak time period when the electric product is operated in the desired operation mode, the electric product is controlled in the same way as that used for an electric product having a single process. That is, the network system controlling method goes from operation S701 to operation S601 of Fig. 6.

As shown in Fig. 6, an operation time period, in which the estimated power information (electricity charge and power consumption amount) is equal to or lower than the predetermined reference value, is recommended (S601).

If the network system controlling method goes to operation S601 in a state where the user selected a desired operation time period as shown by the graph of Fig. 9 and a desired operation mode, an operation time period stratifying a predetermined reference value as shown in Fig. 10 is recommended.

At this time, a start time and an end time are recommended, and since the desired operation mode of the user is maintained, the power consumption amount of the electric product is not changed.

However, since a portion of the operation time period overlapping with an on-peak time period is reduced, although the power consumption amount is not reduced and thus the same performance can be obtained in the desired operation mode, the electricity charge can be largely reduced as compared with the case where the electric product is operation in the original desired operation time period.

Referring to Fig. 6, after the operation time period is recommended, it is determined whether the recommended operation time period is selected (S602). If it is determined that the recommended operation time period is not selected, another operation time period is recommended (S603). On the other hand, if it is determined that the recommended operation time period is selected, the electric product is operated in the desired operation mode for the recommend operation time period (S604).

In operation S507 of Fig. 7, if it is determined that the user does not want to change the operation time period of the electric product, a power-saving operation mode is recommended to reduce the power consumption of the electric product as shown in Fig. 8 (S801).

That is, a power-saving operation mode is recommended to reduce the electricity charge to a predetermined reference or lower in the operation time period the electricity charge of which is high.

As shown in Fig. 9, if the user does not want to change his/her desired operation time period, the electric product is operated in the desired operation time period but a power-saving operation mode is recommended.

If the user selects the recommended power-saving operation mode, the electric product is operated in the power-saving operation mode (S802, S803). For example, the power-saving operation mode may be the same as the originally input operation mode except that the outputs of some or all power-consuming units are reduced. In another example, if the originally input operation mode is an intense course or a steam course which require more electricity than a standard course, a standard course may be recommended as the power-saving operation mode.

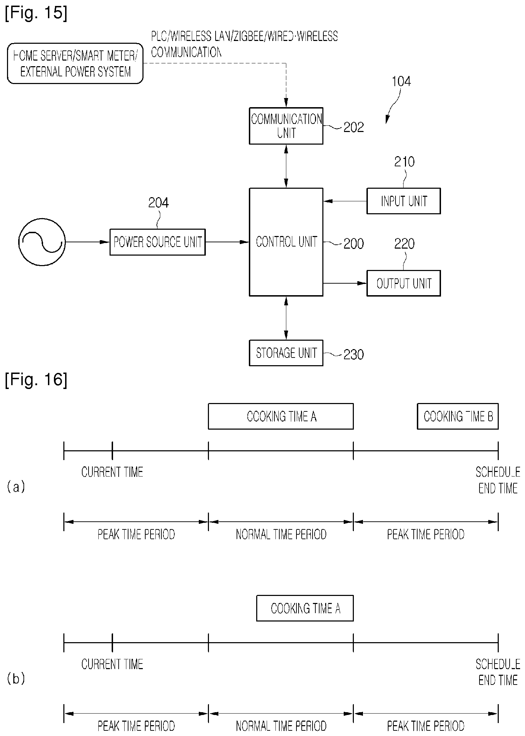

Fig. 15 is a block diagram illustrating a cooking device as an example of electric products.

Referring to Fig. 15, a cooking device 104 includes: a power source unit 204 connected with an external power source to supply power to the cooking device 104; an input unit 210 through which an operation mode of the cooking device 104 can be set and a cooking course and a schedule end time (information about operations of an electric product) can be input; a communication unit 202 connected to an external device by wireless or wire to receive power information including time-varying electricity rate information; and a control unit 200 configured to prepare a cooking schedule based on the cooking course, the schedule end time, and the power information.

The time-varying electricity rate information include electricity rate information in a normal time period and a peak time period. The time-varying electricity rate information includes information about start and end times of a normal time period and a peak time period. A time period, during which customers consume a large amount of power and thus surplus electricity is reduced to a predetermined level or lower, is set as a peak time period by a power provider based on statistics or actual measurement. Thus, the power provider usually puts a high electricity rate on the peak time period to control the use of electricity.

The communication unit 202 is connected to the external device by wireless or wire to receive power information. The wireless or wire communication method of the communication unit 202 includes all communication methods through which data can be transmitted, such as power line communication, wireless LAN, Internet, Zigbee, and serial communication.

A user can set an operation mode through the input unit 210. The operation mode includes a normal operation mode and at least one power-saving operation mode.

If the control unit 200 receives power information including only normal time period information, the control unit 200 may operate the cooking device 104 in the normal operation mode. If the control unit 200 receives power information including both normal time period information and peak time period information, the control unit 200 may operate the cooking device 104 in the set operation mode. That is, if the user sets the cooking device 104 to the normal operation mode, the control unit 200 may operate the cooking device 104 in the normal operation mode although the control unit 200 has received peak time period information. On the other hand, if the user sets the cooking device 104 to a power-saving operation mode and the control unit 200 receives peak time period information, the control unit 200 may operate the cooking device 104 in the power-saving operation mode. If necessary, it may be set so that the operation mode can be automatically changed according to predetermined conditions.

If a user input a cooking course and a schedule end time through the input unit 210, the control unit 200 prepares a cooking schedule based on the cooking course, the schedule end time, and the power information. In addition, the control unit 200 estimates a power consumption amount and an electricity charge based on the power information. The cooking schedule includes at least one of a start time, a cooking time according to time-varying electricity rates, and an actual end time.

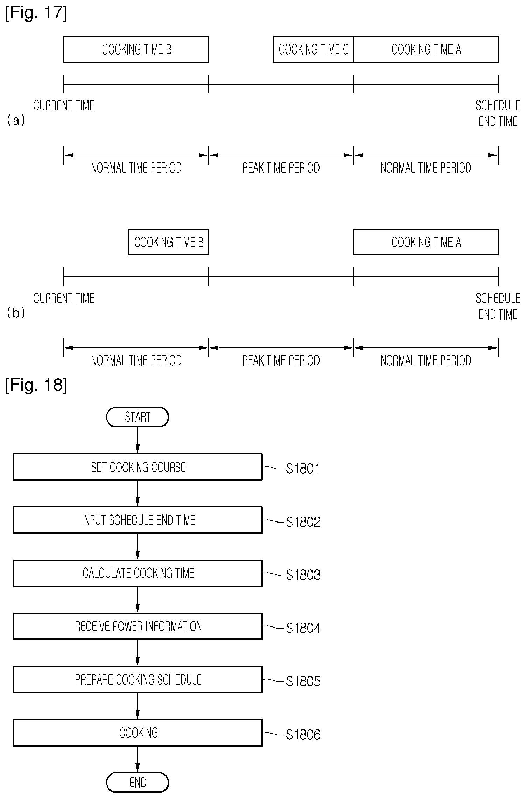

Figs. 16 and 17 are views for explaining a method of controlling a network system according to an example for better understanding of the present invention.

With reference to Fig. 16, a method of controlling a cooking device will be explained in the case where the current time is included in a peak time period and a schedule end time is included in the next peak time period after a normal time period.

If a user inputs a schedule end time, the control unit 200 determines whether the current operation mode is a power-saving operation mode and calculates a total cooking time according to a cooking course. If total cooking times are stored in a storage unit (described later) according to cooking courses, the total cooking time may be read from the storage unit. In the case where the total cooking time is calculated, the humidity and temperature of the inside of the cooking device 104 and the state of food may be detected by using a sensing unit (not shown), and the cooking time may be calculated based on the detected information. If the current operation mode is a power-saving operation mode and time-varying electricity rate information is received through the communication unit 202, the control unit 200 determines whether the total cooking time is included in the normal time period. If it is determined that the total cooking time is longer than the normal time period, the control unit 200 prepares a cooking schedule by dividing the total cooking time as shown in Fig. 16(a). At this time, the end of the cooking time is set to be coincided with the schedule end time. For example, the control unit 200 allocates a portion of the total cooking time to the normal time period and the rest of the total cooking time to the peak time period with the end of the rest cooking time being coincided with the schedule end time. After preparing the cooking schedule, the control unit 200 operates the cooking device 104 according to the cooking schedule. On the other hand, if the total cooking time is shorter than the normal time period, as shown in Fig. 16(b), the control unit 200 may place all the total cooking time in the normal time period in a manner such that the end of the total cooking time is coincided with the end of the normal time period so as to make the end of the total cooking time closer to the schedule end time. If the cooking device 104 is set to the normal operation mode, the control unit 200 may align the end of the total cooking time with the schedule end time regardless of the time periods and may calculate a start time to operate the cooking device 104.

With reference to Fig. 17, a method of controlling a cooking device will be explained in the case where the current time is included in a normal time period and a schedule end time is included in the next normal time period after a peak time period. If a user inputs a schedule end time, the control unit 200 determines whether the current operation mode is a power-saving operation mode and calculates a total cooking time according to a cooking course. If total cooking times are stored in the storage unit (described later) according to cooking courses, the total cooking time may be read from the storage unit. If the current operation mode is a power-saving operation mode and time-varying electricity rate information is received through the communication unit 202, the control unit 200 determines whether the total cooking time is included in the normal time periods. If it is determined that the total cooking time is longer than the normal time periods, the control unit 200 prepares a cooking schedule by dividing the total cooking time as shown in Fig. 17(a). At this time, the end of the total cooking time is set to be coincided with the schedule end time. For example, the control unit 200 allocates a portion of the total cooking time to the normal time period including the schedule end time; and another portion of the total cooking time to the normal time period including the current time; and the rest total cooking time to the peak time period with the end of the rest total cooking time being closer to the schedule end time. After preparing the cooking schedule, the control unit 200 operates the cooking device 104 according to the cooking schedule. On the other hand, if the total cooking time is shorter than the normal time periods, as shown in Fig. 17(b), the control unit 200 allocates all the total cooking time to the normal time periods in a reverse order of the normal time periods so that the end of the total cooking time can be coincided with the end of the schedule end time. If the cooking device 104 is set to the normal operation mode, the control unit 200 may align the end of the total cooking time with the schedule end time regardless of the time periods and may calculate a start time to operate the cooking device 104.

The power source unit 204 receives external power, that is, commercial AC power and outputs a DC voltage for operating circuits and units of the control unit 200 and the cooking device 104.

The cooking device 104 further includes an output unit 220 configured to display at least one of the cooking course, the power information, the cooking schedule, the estimated power consumption amount, and the estimated electricity charge; and a storage unit 230 configured to store total cooking times in relation with cooking courses.

The power information includes the kind of the external power source and a greenhouse gas index of the external power source. Thus, the control unit 200 can calculate an estimated electricity charge and a greenhouse gas emission amount from the power information. The output unit 220 may further display at least one of the kind of the external power source, the greenhouse gas index, the electricity charge, and the greenhouse gas emission amount. Based on the estimated power consumption amount, the control unit 200 may calculate the greenhouse gas emission amount of the external power source. For example, a carbon dioxide emission amount may be calculated by multiplying a carbon dioxide index of the external power source by estimated power consumption amount. The external power source may generate electricity by using a fossil fuel such as oil or gas; an alternative energy source such as solar light, solar heat, wind power, tidal power, water power, and geothermal power; nuclear power; and fuel cells. Greenhouse gas indexes such as carbon dioxide indexes for such energy sources may be determined by experiments.

The control unit 200 calculates a greenhouse gas emission amount of the external power source. The output unit 220 further displays one of the kind of the external power source, the greenhouse gas index, and the greenhouse gas emission amount. The communication unit 202 can transmit information about a power requirement, an electricity charge, and a greenhouse gas emission amount of the cooking device 104 to an outer device by wireless or wire.

Fig. 18 is a flowchart for explaining the network system controlling method according to said example. In Fig. 18, a cooking device is explained as an example of electric products.

Referring to Fig. 18, a cooking course of a cooking device is selected (S1801). A schedule end time is input for the cooking course (S1802). Next, the cooking time of the selected cooking course is calculated (S1803). The cooking device receives power information (S1804). The operation S1804 may be performed prior to operation S1802 or operation S1803.

A cooking schedule is prepared based on the cooking course, the schedule end time, and the power information (S1805), and the cooking device is operated according to the cooking schedule to cook a food (S1806).

At this time, the cooking schedule is prepared based on a total cooking time and time-varying electricity rate information as explained with reference to Figs. 16 and 17.

## Claims

1. A method of controlling a network system, the method comprising:
- recognizing power information including information about an on-peak time period and an off-peak time period and recognizing (S501) time information regarding an operation of an electric product, the time information including a desired operation time period;
- estimating power information of the electric product in the desired operation time period, the power information of the electric product including at least one of a power consumption amount and a total electricity charge,
- determining whether the estimated power information is equal to or higher than a predetermined reference value (S504);
- if it is determined that the estimated power information is equal to or higher than the predetermined reference value, determining (S507) whether the user wants to change the operation time period of the electric product;
- if it is determined that the user wants to change the operation time period of the electric product, determining (S508) whether an operation mode of the electric product includes a plurality of time-series processes;
- if it is determined that the operation mode of the electric product includes a plurality of time-series processes, determining (S701) whether a portion or all of the operation time period is included in the on-peak time period when the electric product is operated in the operation mode;
- if it is determined that a portion or all of the operation time period is included in the on-peak time period, determining (S702) whether a last process of the plurality of time-series processes should be performed in the on-peak time period; and
- if it is determined that the last process of the plurality of time-series processes should be performed in the on-peak time period, operating the electric product in an energy-saving operation mode for reducing an energy-related value based on the recognized power information and the time information, wherein the operation of the electric product is changed so that only the last process or some processes including the last process are performed in the on-peak time period and the estimated power information is equal to or lower than the predetermined reference value (S703).

2. The method according to claim 1, wherein the energy-related value comprises an electricity charge necessary for operating the electric product.

3. The method according to claim 1, wherein the time information comprises further at least one of an operation start time, an operation end time, and an operation time range.

4. The method according to claim 1, wherein the energy-saving operation mode comprises a mode in which the electric product is operated within a time range including a changed time period.

5. The method according to claim 4, wherein if the electric product is operated in the energy-saving operation mode, an interval between an operation start time and an operation end time of the electric product is increased.

6. The method according to claim 1, wherein the energy-saving operation mode comprises a mode in which the electric product is operated at a time changed from the desired operation time.

7. The method according to claim 6, wherein the time changed from the desired operation time comprises an operation start time or an operation end time of the electric product.

8. The method according to claim 1, wherein a total operation time of the electric product overlaps less with the on-peak time period when the electric product is operated in the energy-saving operation mode than when the electric product is operated according to the desired operation time.

## Patentansprüche

1. Verfahren zum Steuern eines Netzwerksystems, das Verfahren umfassend:
- Erkennen von Leistungsinformationen, die Informationen über einen Hochlastzeitraum und einen Schwachlastzeitraum beinhalten, und Erkennen (S501) von Zeitinformationen betreffend einen Betrieb eines elektrischen Produkts, wobei die Zeitinformationen eine gewünschte Betriebszeitdauer beinhalten;
- Schätzen von Leistungsinformationen des elektrischen Produkts in der gewünschten Betriebszeitdauer, wobei die Leistungsinformationen über das elektrische Produkt mindestens eines aus einer Energieverbrauchsmenge und den gesamten Stromkosten beinhaltet,
- Ermitteln, ob die geschätzten Leistungsinformationen gleich oder höher als ein vorgegebener Referenzwert sind (S504);
- wenn ermittelt wird, dass die geschätzten Leistungsinformationen gleich oder höher als der vorgegebene Referenzwert sind, Ermitteln (S507), ob der Benutzer die Betriebszeitdauer des elektrischen Produkts verändern möchte;
- wenn ermittelt wird, dass der Benutzer die Betriebszeitdauer des elektrischen Produkts verändern möchte, Ermitteln (S508), ob ein Betriebsmodus des elektrischen Produkts eine Vielzahl von Zeitreihenprozessen beinhaltet;
- wenn ermittelt wird, dass der Betriebsmodus des elektrischen Produkts eine Vielzahl von Zeitreihenprozessen beinhaltet, Ermitteln (S701), ob ein Teil oder die gesamte Betriebszeitdauer in dem Hochlastzeitraum beinhaltet ist, wenn das elektrische Produkt in dem Betriebsmodus betrieben wird;
- wenn ermittelt wird, dass ein Teil oder die gesamte Betriebszeitdauer in dem Hochlastzeitraum beinhaltet ist, Ermitteln (S702), ob ein letzter Prozess aus der Vielzahl von Zeitreihenprozessen in dem Hochlastzeitraum durchgeführt werden soll; und
- wenn ermittelt wird, dass der letzte Prozess aus der Vielzahl von Zeitreihenprozessen in dem Hochlastzeitraum durchgeführt werden soll, Betreiben des elektrischen Produkts in einem Energiespar-Betriebsmodus zum Senken eines energiebezogenen Wertes, basierend auf den erkannten Leistungsinformationen und den Zeitinformationen, wobei der Betrieb des elektrischen Produkts verändert wird, sodass nur der letzte Prozess oder einige Prozesse, die den letzten Prozess beinhalten, in dem Hochlastzeitraum durchgeführt werden und die geschätzten Leistungsinformationen gleich oder geringer als der vorgegebene Referenzwert sind (S703).

2. Verfahren nach Anspruch 1, wobei der energiebezogene Wert eine elektrische Ladung umfasst, die zum Betreiben des elektrischen Produkts erforderlich ist.

3. Verfahren nach Anspruch 1, wobei die Zeitinformationen ferner mindestens eines aus einer Betriebsstartzeit, eine Betriebsendzeit und eine Betriebszeitperiode umfassen.

4. Verfahren nach Anspruch 1, wobei der Energiespar-Betriebsmodus einen Modus umfasst, in dem das elektrische Produkt innerhalb einer Zeitperiode, die eine geänderte Zeitdauer beinhaltet, betrieben wird.

5. Verfahren nach Anspruch 4, wobei, wenn das elektrische Produkt in dem Energiespar-Betriebsmodus betrieben wird, eine Zeitspanne zwischen einer Betriebsstartzeit und einer Betriebsendzeit des elektrischen Produkts erhöht wird.

6. Verfahren nach Anspruch 1, wobei der Energiespar-Betriebsmodus einen Modus umfasst, in dem das elektrische Produkt zu einer Zeit betrieben wird, der im Vergleich zu der gewünschten Betriebszeit geändert wurde.

7. Verfahren nach Anspruch 6, wobei die veränderte Zeit im Vergleich zu der gewünschten Betriebszeit eine Betriebsstartzeit oder eine Betriebsendzeit des elektrischen Produkts umfasst.

8. Verfahren nach Anspruch 1, wobei eine gesamte Betriebszeit des elektrischen Produkts weniger mit einem Hochlastzeitraum überlappt, wenn das elektrische Produkt in dem Energiespar-Betriebsmodus betrieben wird, als wenn das elektrische Produkt gemäß der gewünschten Betriebszeit betrieben wird.

## Revendications

1. Procédé de commande d'un système de réseau, le procédé comprenant :
- reconnaître des informations de puissance comprenant des informations à propos d'une période de temps sur crête et d'une période de temps hors crête et reconnaître (S501) des informations temporelles concernant un fonctionnement d'un produit électrique, les informations temporelles comprenant une période de temps de fonctionnement souhaitée ;
- estimer des informations de puissance du produit électrique dans la période de temps de fonctionnement souhaitée, les informations de puissance du produit électrique comprenant au moins l'une d'une quantité de consommation de puissance et d'une charge d'électricité totale,
- déterminer si les informations de puissance estimées sont ou non égales ou supérieures à une valeur de référence prédéterminée (S504) ;
- s'il est déterminé que les informations de puissance estimées sont égales ou supérieures à la valeur de référence prédéterminée, déterminer (S507) si l'utilisateur souhaite ou non changer la période de temps de fonctionnement du produit électrique ;
- s'il est déterminé que l'utilisateur souhaite changer la période de temps de fonctionnement du produit électrique, déterminer (S508) si un mode de fonctionnement du produit électrique comprend ou non une pluralité de processus de série temporelle ;
- s'il est déterminé que le mode de fonctionnement du produit électrique comprend une pluralité de processus de série temporelle, déterminer (S701) si une partie ou la totalité de la période de temps de fonctionnement est ou non comprise dans la période de temps sur crête lorsque le produit électrique fonctionne dans le mode de fonctionnement ;
- s'il est déterminé qu'une partie ou la totalité de la période de temps de fonctionnement est comprise dans la période de temps sur crête, déterminer (S702) si un dernier processus de la pluralité de processus de série temporelle doit ou non être réalisé dans la période de temps sur crête ; et
- s'il est déterminé que le dernier processus de la pluralité de processus de série temporelle doit être réalisé dans la période de temps sur crête, utiliser le produit électrique dans un mode de fonctionnement à économie d'énergie pour réduire une valeur associée à l'énergie sur la base des informations de puissance reconnues et des informations temporelles, le fonctionnement du produit électrique étant modifié de telle sorte qu'uniquement le dernier processus ou certains processus comprenant le dernier processus sont réalisés dans la période de temps sur crête et les informations de puissance estimées sont égales ou inférieures à la valeur de référence prédéterminée (S703).

2. Procédé selon la revendication 1, dans lequel la valeur associée à l'énergie comprend une charge d'électricité nécessaire pour utiliser le produit électrique.

3. Procédé selon la revendication 1, dans lequel les informations temporelles comprennent en outre au moins l'un d'un temps de début de fonctionnement, d'un temps de fin de fonctionnement et d'une plage temporelle de fonctionnement.

4. Procédé selon la revendication 1, dans lequel le mode de fonctionnement à économie d'énergie comprend un mode dans lequel le produit électrique fonctionne dans une plage temporelle comprenant une période de temps modifiée.

5. Procédé selon la revendication 4, dans lequel, si le produit électrique fonctionne dans le mode de fonctionnement à économie d'énergie, un intervalle entre un temps de début de fonctionnement et un temps de fin de fonctionnement du produit électrique est augmenté.

6. Procédé selon la revendication 1, dans lequel le monde de fonctionnement à économie d'énergie comprend un mode dans lequel le produit électrique fonctionne à un temps modifié par rapport au temps de fonctionnement souhaité.

7. Procédé selon la revendication 6, dans lequel le temps modifié par rapport au temps de fonctionnement souhaité comprend un temps de début de fonctionnement ou un temps de fin de fonctionnement du produit électrique.

8. Procédé selon la revendication 1, dans lequel un temps de fonctionnement total du produit électrique se chevauche moins avec la période de temps sur crête lorsque le produit électrique fonctionne dans le mode de fonctionnement à économie d'énergie que lorsque le produit électrique fonctionne selon le temps de fonctionnement souhaité.
